# EUROPEAN PATENT SPECIFICATION

(11) **EP 3 354 328 B1**
(45) Date of publication and mention of the grant of the patent: **25.12.2019**
(21) Application number: 18150528.0
(22) Date of filing: 08.01.2018
(51) Int. Cl.: B01D 53/34, A47L 9/16, B01D 45/12, B01D 53/44, B01D 53/68

(54) **A SYSTEM AND METHOD FOR PURIFYING GAS**
SYSTEME UND VERFAHREN ZUR REINIGUNG VON GAS
SYSTÈME ET PROCÉDÉ DE PURIFICATION DE GAZ

(30) Priority: 25.01.2017 PL 42030117
(43) Date of publication of application: 01.08.2018
(73) Proprietor: MTT Technologies GmbH, 3173 Oberwagen b. Bern (CH)
(72) Inventor: PAROSA, Ryszard, 53-213 Wroclaw (PL)
(74) Representative: Kancelaria Eupatent.pl Sp. z.o.o

(56) References cited:
- KR-A- 20010 069 629
- KR-B1- 100 794 236
- US-A1- 2003 026 743

## Description

### TECHNICAL FIELD

The present disclosure relates to purifying gas, in particular gas which is contaminated with organic compounds.

### BACKGROUND

There are known various methods for purifying a contaminated gas stream.

A Polish patent PL195905B discloses a method for purifying a gas stream containing organic impurities, wherein the gas stream flows out of a reactor for condensation of a solid phase, in particular aromatic polyesters and polyamides. In that method, oxygen-containing gas is delivered to a stream of gas with contaminants. The combined stream of gas in a high temperature, in particular from 280°C to 380°C, is subsequently transported into a catalytic converter, comprising rhodium or rhodium alloy on a neutral, porous carrier. A substoichiometric amount of oxygen is used in relation to organic contaminants and/or the ratio of oxygen to contaminants is controlled by means of a lambda probe.

There are also known systems for purifying gas comprising a chamber filled with ceramic inserts, which are heated with microwaves (see, for instance, KR100794236B). Filling the chamber with ceramic fittings limits space within the chamber, thus the volume of gas passing through the deposit per a unit of time is considerably limited. This results in significant limitation of an efficiency of the device. Moreover, heating the gas indirectly by heating ceramic inserts with microwaves is an energy-intensive process. Microwave generators have an efficiency of approximately 60% and as a result, approximately 40% of the energy drawn from the electrical supply is lost. In known solutions, the gas to be purified is placed in a zone wherein it has the required high temperature only for a relatively short time and after passing through the zone with the heated ceramic inserts it is quickly cooled down. As a result, the time of burning the contaminants (i.e. the time during which the contaminants are oxidised) is short, which affects the efficiency of the purification process. Therefore, in order to ensure effective burning of contaminants based on that solution, several subsequent sections with microwave heaters are necessary, which increases energy consumption and the overall costs of that installation.

Therefore, there is a need to improve the efficiency of purifying gas and to reduce the costs of operation and manufacturing of the system, while keeping a simple structure of the system.

### SUMMARY

There is disclosed herein a system for purifying gas of contaminants, the system comprising: a cyclone connected to an ozone generator; a heat exchanger having a first channel for gas and a second channel for gas, placed with respect to each other such that heat is exchanged between the first channel and the second channel; a cylindrical afterburner chamber having a gas inlet, a gas outlet and a ceramic pipe extending along the axis of the afterburner chamber, wherein a first end of the ceramic pipe is located within a part of the afterburner chamber opposite the gas inlet of the afterburner chamber, and a second end of the pipe constitutes a gas outlet, which is located outside the afterburner chamber and exits the afterburner chamber near the gas inlet, and wherein the afterburner chamber comprises consecutive arrangement, along its axis, from the side of the gas inlet of an assembly of heating elements and microwave radiators, and wherein on the walls of the afterburner chamber near the microwave radiators there are placed ceramic elements; wherein the cyclone is connected via the first channel of the heat exchanger to the inlet of the afterburner chamber, and the outlet of the afterburner chamber is connected to the second channel of the heat exchanger, whose end is connected to the outlet of gas into the atmosphere, and wherein the system further comprises a container with a calcium carbonate deposit located along the gas flow path after the first channel of the heat exchanger.

The container with the calcium carbonate deposit can be positioned between the gas outlet of the afterburner chamber and the second channel of the heat exchanger.

The container with the calcium carbonate deposit can be positioned behind the second channel of the heat exchanger.

The container with the calcium carbonate deposit can be positioned between the first channel of the heat exchanger and the inlet of the afterburner chamber.

There is also disclosed a method for purifying gas of contaminants in a system as described above, the method comprising: in the cyclone, ozonating and dedusting the gas; directing the gas from the cyclone to the afterburner chamber via the first channel of the heat exchanger; burning the gas in the afterburner chamber consecutively by means of heating elements having a temperature within a range of 600 to 800°C, and by means of microwave generators that heat the ceramic elements to a temperature within a range of 800 to 1200°C; directing the heated gas from the afterburner chamber to the second channel of the heat exchanger, thereby heating the gas flowing via the first channel of the heat exchanger; discharging the gas to the atmosphere via the gas outlet; and passing the gas, which leaves the first channel of the heat exchanger, through the container with the calcium carbonate deposit, thereby heating up the deposit to a temperature within a range of 300 to 500°C.

### BRIEF DESCRIPTION OF DRAWINGS

The disclosure is shown by means of example embodiments in a drawing, wherein:
Fig. 1 presents a first embodiment of the system;
Fig. 2 presents a second embodiment of the system;
Fig. 3 presents a third embodiment of the system;
Fig. 4 presents a method for purifying gas.

### DETAILED DESCRIPTION

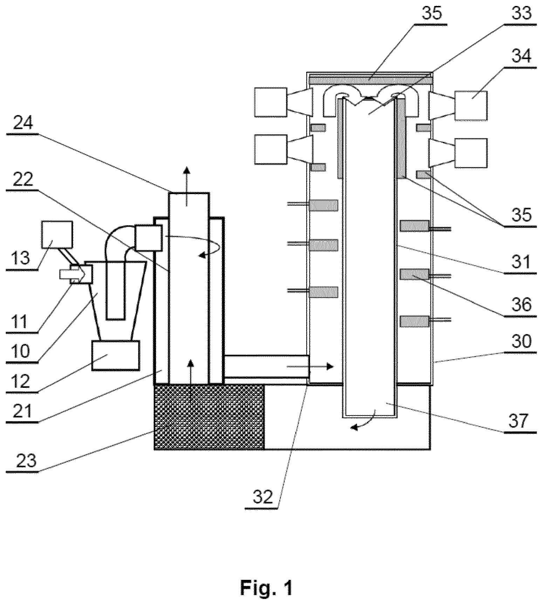

Fig. 1 presents a first embodiment of the system. It comprises a cyclone 10 connected to an ozone generator 13, having a dedicated inlet for introducing ozone therein. The gas to be purified enters the system via the gas inlet 11 of the cyclone 10. The cyclone 10 has internal walls lined with a ceramic material or another coating which is resistant to oxidation (such as a polymer paint). A container 12 for dusts is located at the bottom of the cyclone 10. In alternative embodiments, a multicyclone can be used in place of the cyclone 10.

The system further comprises a heat exchanger having a first channel 21 and a second channel 22 for conducting gas. The channels 21 and 22 are placed with respect to each other so as to enable exchange of heat therebetween. For example, a part of one channel can be placed inside the other channel, so that the gas flowing through one channel transfers its heat to the gas flowing through the other channel.

The system further comprises a thermally insulated cylindrical heating chamber 30 having a gas inlet 32 and a gas outlet 37. The cyclone 10 is connected via the first channel 21 of the heat exchanger to the inlet 32 of the heating chamber 30. Inside the heating chamber 30 there is a ceramic pipe 31 that extends along the axis of the heating chamber 30. The pipe is made of a ceramic material, preferably silicon carbide. The first end 33 of the pipe 31 is located within the part of the heating chamber 30 that is opposite the gas inlet 32 of the heating chamber 30, and the second end of the pipe 31 constitutes a gas outlet 37, which is located outside the heating chamber 30 and exits its part near the gas inlet 32. The heating chamber 30 comprises the following element, arranged consecutively along its axis from the side of the gas inlet 32: an assembly of electrical heaters 36 and at least two microwave radiators 34. The electrical heaters 36 and/or a gas burner heat up the gas to a temperature within a range of 600 to 800°C. In some applications, it could be preferable to perform initial reheating by means of a burner rather than by means of electric heaters. Furthermore, ceramic elements 35 for absorbing microwaves are placed on the walls of the heating chamber 30 and of the pipe 31. The ceramic elements 35 are arranged along the path of the flowing gas in a way so as to interrupt the flow of the gas to as little extent as possible. This improves the efficiency of the system. For example, the ceramic elements 35 can be made of silicon carbide. The ceramic elements 35 are heated up with microwave energy to a temperature of about 800 to 1200°C, depending on the type of contaminants in the gas, which results in heating of the gas passing along the ceramic elements. As a result, the heated gas is returned after passing the entire length of the afterburner chamber 30 and pumped in an opposite direction inside the pipe 31, which allows longer storage of the gas being purified in a zone of a high temperature. In other words, the gas heated by the electric heater 36 is pumped along the outer wall of the ceramic pipe 31, and subsequently it is directed inside the pipe 31 near the ceramic elements 35, where the gas flows in an opposite direction and it is further heated as a result of the contact with the pipe 31 heated with the microwave energy. This extends the time during which the contaminants are being oxidised. The height of the heating chamber 30 and of the pipe 31 placed therein is preferably designed such as to ensure that the gasses have a temperature of above 800°C for at least 4 seconds, to ensure complete burning of contaminants in the gas.

Electrical heaters 36 are controlled by a set of thermocouples placed inside the afterburner chamber. The ceramic elements 35 preferably comprise additives of metals, preferably from the platinum group. After heating by microwaves and the heat from the ceramic elements 35 up to the required temperature within the range of 800 to 1200°C, the gas returns, by being directed inside the ceramic pipe 31, which is also heated with the microwaves from the microwave radiators 34.

The outlet 37 of the heating chamber 30, which is also the outlet of the ceramic pipe 31, is connected to the second channel 22 of the heat exchanger. The end of the second channel 22 is connected to the outlet 24 of the gas into the atmosphere. Therefore, the system constitutes a flow path for the gas to be purified, wherein the first element is the cyclone 10 with the inlet 11 of the contaminated gas, and the last element is the outlet of the purified gas 24 into the atmosphere. Additionally, along the gas flow path within the system, behind the first channel 21 of the heat exchanger, there is a container 23 with a calcium carbonate deposit.

In the first embodiment, the container 23 with the calcium carbonate deposit is placed between the gas outlet 37 of the heating chamber 30 and the second channel 22 of the heat exchanger.

The other embodiments include other examples of positioning of the container 23. The chamber is filled with granulated calcium carbonate, which constitutes a dry absorber of chlorine, fluorine and sulphur.

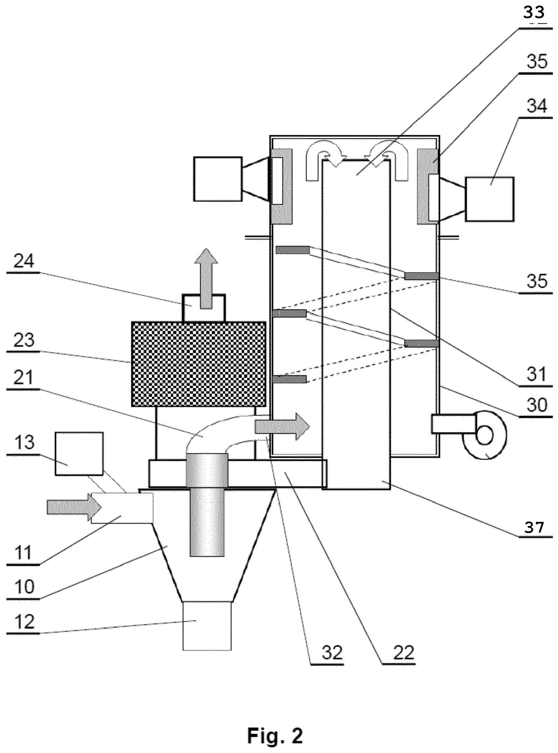

Fig. 2 presents a second embodiment of the system. The second embodiment differs from the first embodiment of Fig. 1 in that the container 23 with the calcium carbonate deposit is placed along the gas flow path behind the second channel 22 of the heat exchanger.

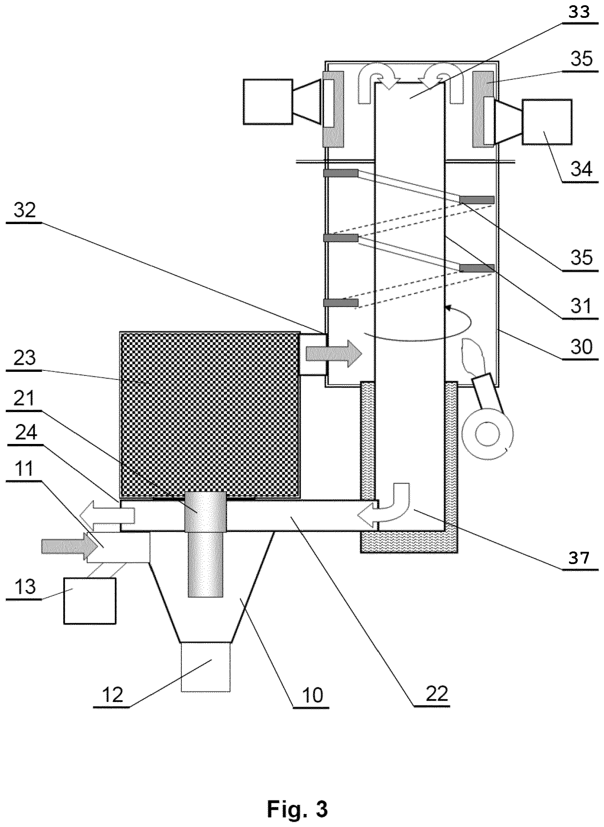

Fig. 3 presents a third embodiment of the system. The third embodiment differs from the first embodiment of Fig. 1 in that the container 23 with the calcium carbonate deposit is placed along the gas flow path between the first channel 21 of the heat exchanger and the inlet 32 of the heating chamber 30.

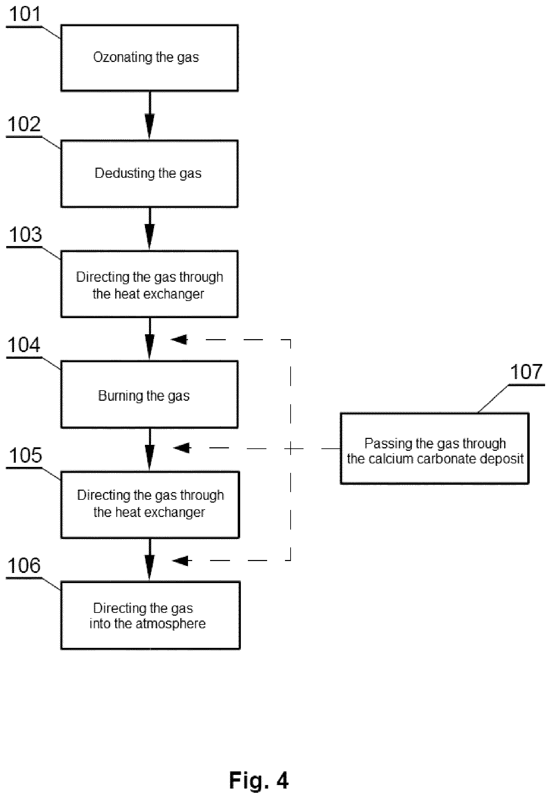

Fig. 4 presents a method for purifying gas in a system as presented above. Initially, the gas in the cyclone 10 is ozonated is step 101 and dedusted in step 102. Due to the introduction of ozone into the cyclone 10, the gas is oxidised. The gas to be purified, along with the excessive ozone, is directed in step 103 to the first channel 21 of the heat exchanger, wherein the gas is heated by the gas which has already been burnt in the afterburner chamber 30. The excessive ozone O₃ is therein successfully reduced to O₂ in the zone of higher temperature, which eliminates the necessity of using solutions such as an activated carbon deposit (which would require to be frequently replaced). Ozone is reduced to oxygen, involving the ozone which did not react inside the cyclone 10, in the gas leaving the cyclone 10 while passing through the first channel 10 of the heat exchanger.

Subsequently, the gas is directed from the first channel 21 of the heat exchanger into the upper part of the afterburner chamber 30 through its gas inlet 32. Along its way, the gas being purified is burnt in step 104 subsequently by means of the electric heater 36 and/or the gas burner in a temperature within a range of 600 to 800°C, as well as by means of microwave generators 34 that heat the ceramic elements 35 to the temperature of 800 to 1200°C. At least two microwave radiators 34 are positioned on the housing of the heating chamber 30, having microwave generators that emit microwave energy onto the ceramic elements 35 positioned in the upper part of the heating chamber 30 and the ceramic pipe 31.

The hot air previously heated by electrical heaters 36 and reheated by the hot ceramic elements 35, causing catalytic burning of contaminants in the gas being purified, is directed inside the pipe 31, in which the contaminants are further burned.

After burning in the afterburner chamber 30, the gas is returned into the heat exchanger, and in particular into its second channel 22. In other words, the heated gas is directed in step 105 from the heating chamber 30 into the second channel 22 of the heat exchanger, thereby heating the gas flowing via the first channel 21 of the heat exchanger. The cooler gas directed into the first channel 21 is heated by a heat exchanger, in which the hot gas after being purified in the catalytic afterburner chamber 30 is cooled down, heating the cooler gas introduced via the first channel 21 from the cyclone 10. Subsequently, the purified gas is discharged 106 into the atmosphere via the gas outlet 24. Moreover, after the gas leaves the first channel 21 of the heat exchanger, it is directed in step 107 through the container 23 with the calcium carbonate deposit, thereby heating it, preferably up to a temperature of 300-500°C. The gas heated in the exchanger, preferably up to from 300 to 500°C, is subsequently pumped through the container 23. The temperature is selected within these limits for the reason that hot granules absorb chlorine, fluorine and sulphur much more effectively, but heating up to a higher temperature (i.e. above 500°C) would result in melting the granules. Depending on the particular embodiment, the gas is passed through the deposit with calcium carbonate: directly after directing the gas from the cyclone via the first channel 21 of the heat exchanger in step 103; or directly after burning the gas in the afterburner chamber 30 in step 104; or directly after directing the heated gas via the second channel 22 of the heat exchanger in step 105.

The method as presented herein allows increasing the efficiency of purifying the gas by using particular components of the system being arranged in a particular order.

Directing the gas in an elevated temperature via the container 23 with the calcium carbonate deposit allows efficient absorption of chlorine, fluorine and sulphur (as well as their compounds) contained in the gas. The heat energy of the burnt gas (which in normal conditions would be wasted while cooling the gas) is used herein to increase the efficiency of the purification of the gas. Therefore, energy is saved and the efficiency of purification is increased, allowing reduction of costs and providing a system with a compact structure. Additionally, in the gas leaving the cyclone 10, while passing through the first channel 10 of the heat exchanger, ozone which did not react inside the cyclone is converted to oxygen. The introduction of ozone allows quicker and more cost-effective increase in the temperature of the gas being purified. Moreover, the distribution of ceramic elements 35 in the upper part of the afterburner chamber 30, by locating them near the walls of the chamber 30 directly behind the electrical heaters 36, and placing a ceramic pipe 31 inside, allows efficient reheating and burning of the gas being purified, with a maximum saving of the space occupied by the system. Such a configuration also allows increasing the performance by ensuring free flow of gas near the heating elements.

## Claims

1. A system for purifying gas, the system comprising:
- a cyclone (10) connected to an ozone generator (13);
- a heat exchanger having a first channel (21) for gas and a second channel (22) for gas, placed with respect to each other such that heat is exchanged between the first channel (21) and the second channel (22);
- a cylindrical afterburner chamber (30) having a gas inlet (32), a gas outlet (37) and a ceramic pipe (31) extending along the axis of the afterburner chamber (30), wherein a first end (33) of the ceramic pipe (31) is located within a part of the afterburner chamber (30) opposite the gas inlet (32) of the afterburner chamber (30), and a second end of the pipe (31) constitutes a gas outlet (37), which is located outside the afterburner chamber (30) and exits the afterburner chamber near the gas inlet (32), and wherein the afterburner chamber (30) comprises consecutive arrangement, along its axis, from the side of the gas inlet (32) of an assembly of heating elements and microwave radiators (34), and wherein on the walls of the afterburner chamber (30) near the microwave radiators (34) there are placed ceramic elements (35);
- wherein the cyclone (10) is connected via the first channel (21) of the heat exchanger to the inlet (32) of the afterburner chamber (30), and the outlet (37) of the afterburner chamber (30) is connected to the second channel (22) of the heat exchanger, whose end is connected to the outlet (24) of gas into the atmosphere;
- and wherein the system further comprises a container (23) with a calcium carbonate deposit located along the gas flow path after the first channel (21) of the heat exchanger.

2. The system according to claim 1, wherein the container (23) with the calcium carbonate deposit is positioned between the gas outlet (37) of the afterburner chamber (30) and the second channel (22) of the heat exchanger.

3. The system according to claim 1, wherein the container (23) with the calcium carbonate deposit is positioned behind the second channel (22) of the heat exchanger.

4. The system according to claim 1, wherein the container (23) with the calcium carbonate deposit is positioned between the first channel (21) of the heat exchanger and the inlet (32) of the afterburner chamber (30).

5. A method for purifying gas of contaminants in a system according to any of previous claims, the method comprising:
- in the cyclone (10), ozonating (101) and dedusting (102) the gas;
- directing (103) the gas from the cyclone (10) to the afterburner chamber (30) via the first channel (21) of the heat exchanger;
- burning (104) the gas in the afterburner chamber (30) consecutively by means of heating elements having a temperature within a range of 600 to 800°C, and by means of microwave generators (34) that heat the ceramic elements (35) to a temperature within a range of 800 to 1200°C;
- directing (105) the heated gas from the afterburner chamber (30) to the second channel (22) of the heat exchanger, thereby heating the gas flowing via the first channel (21) of the heat exchanger;
- discharging (106) the gas to the atmosphere via the gas outlet (24); and
- passing (107) the gas, which leaves the first channel (21) of the heat exchanger, through the container (23) with the calcium carbonate deposit, thereby heating up the deposit to a temperature within a range of 300 to 500°C.

## Patentansprüche

1. System zum Reinigen von Gas, wobei das System Folgendes umfasst:
- eine Wirbelkammer (10), die mit einem Ozongenerator (13) verbunden ist;
- einen Wärmetauscher, der einen ersten Kanal (21) für Gas und einen zweiten Kanal (22) für Gas aufweist, die in Bezug zueinander platziert sind, sodass Wärme zwischen dem ersten Kanal (21) und dem zweiten Kanal (22) ausgetauscht wird;
- eine zylindrische Nachbrennerkammer (30), die einen Gaseinlass (32), einen Gasauslass (37) und ein Keramikrohr (31) aufweist, das sich entlang der Achse der Nachbrennerkammer (30) erstreckt, wobei sich ein erstes Ende (33) des Keramikrohres (31) innerhalb eines Teils der Nachbrennerkammer (30) gegenüber dem Gaseinlass (32) der Nachbrennerkammer (30) befindet und ein zweites Ende des Rohres (31) einen Gasauslass (37) bildet, der sich außerhalb der Nachbrennerkammer (30) befindet und nahe dem Gaseinlass (32) aus der Nachbrennerkammer austritt, und wobei die Nachbrennerkammer (30) entlang ihrer Achse von der Seite des Gaseinlasses (32) konsekutive Anordnung einer Baugruppe an Heizelementen und Mikrowellenstrahlern (34) umfasst und wobei an den Wänden der Nachbrennerkammer (30) nahe den Mikrowellenstrahlern (34) Keramikelemente (35) platziert sind;
- wobei die Wirbelkammer (10) über den ersten Kanal (21) des Wärmetauschers mit dem Einlass (32) der Nachbrennerkammer (30) verbunden ist und der Auslass (37) der Nachbrennerkammer (30) mit dem zweiten Kanal (22) des Wärmetauschers verbunden ist, dessen Ende mit dem Auslass (24) von Gas in die Atmosphäre verbunden ist;
- und wobei das System ferner einen Behälter (23) mit einer Calciumkarbonatablagerung umfasst, der sich entlang des Gasströmungsweges nach dem ersten Kanal (21) des Wärmetauschers befindet.

2. System nach Anspruch 1, wobei der Behälter (23) mit der Calciumkarbonatablagerung zwischen dem Gasauslass (37) der Nachbrennerkammer (30) und dem zweiten Kanal (22) des Wärmetauschers positioniert ist.

3. System nach Anspruch 1, wobei der Behälter (23) mit der Calciumkarbonatablagerung hinter dem zweiten Kanal (22) des Wärmetauschers positioniert ist.

4. System nach Anspruch 1, wobei der Behälter (23) mit der Calciumkarbonatablagerung zwischen dem ersten Kanal (21) des Wärmetauschers und dem Einlass (32) der Nachbrennerkammer (30) positioniert ist.

5. Verfahren zum Reinigen von Gas von Verunreinigungen in einem System nach einem der vorhergehenden Ansprüche, wobei das Verfahren Folgendes umfasst:
- Ozonisieren (101) und Entstauben (102) des Gases in der Wirbelkammer (10);
- Leiten (103) des Gases von der Wirbelkammer (10) zu der Nachbrennerkammer (30) über den ersten Kanal (21) des Wärmetauschers;
- Verbrennen (104) des Gases in der Nachbrennerkammer (30) konsekutiv mittels Heizelementen, die eine Temperatur innerhalb eines Bereichs von 600 bis 800 °C aufweisen, und mittels Mikrowellengeneratoren (34), die die Keramikelemente (35) auf eine Temperatur innerhalb eines Bereichs von 800 bis 1200 °C erwärmen;
- Leiten (105) des erwärmten Gases von der Nachbrennerkammer (30) zu dem zweiten Kanal (22) des Wärmetauschers, wodurch das Gas erwärmt wird, das über den ersten Kanal (21) des Wärmetauschers strömt;
- Ablassen (106) des Gases in die Atmosphäre über den Gasauslass (24); und
- Geben (107) des Gases, das den ersten Kanal (21) des Wärmetauschers verlässt, durch den Behälter (23) mit der Calciumkarbonatablagerung, wodurch die Ablagerung auf eine Temperatur innerhalb eines Bereichs von 300 bis 500 °C erwärmt wird.

## Revendications

1. Système destiné à la purification de gaz, le système comprenant :
- un cyclone (10) raccordé à un générateur d'ozone (13) ;
- un échangeur de chaleur possédant un premier canal (21) pour gaz et un second canal (22) pour gaz, placés l'un par rapport à l'autre de sorte que la chaleur soit échangée entre le premier canal (21) et le second canal (22) ;
- une chambre de post-combustion cylindrique (30) comportant une entrée de gaz (32), une sortie de gaz (37) et un tuyau en céramique (31) s'étendant le long de l'axe de la chambre de post-combustion (30), une première extrémité (33) du tuyau en céramique (31) étant située dans une partie de la chambre de post-combustion (30) opposée à l'entrée de gaz (32) de la chambre de post-combustion (30), et une seconde extrémité du tuyau (31) constituant une sortie de gaz (37) qui est située à l'extérieur de la chambre de post-combustion (30) et sortant de la chambre de post-combustion près de l'entrée de gaz (32), et ladite chambre de post-combustion (30) comprenant un agencement successif, le long de son axe, à partir du côté de l'entrée de gaz (32) d'un ensemble d'éléments chauffants et de radiateurs à micro-ondes (34) et des éléments en céramique (35) étant placés sur les parois de la chambre de post-combustion (30) à proximité des radiateurs à micro-ondes (34) ;
- ledit cyclone (10) étant raccordé par l'intermédiaire du premier canal (21) de l'échangeur de chaleur à l'entrée (32) de la chambre de post-combustion (30), et la sortie (37) de la chambre de post-combustion (30) étant raccordée au second canal (22) de l'échangeur de chaleur, dont l'extrémité est raccordée à la sortie (24) du gaz dans l'atmosphère ;
- et ledit système comprenant en outre un récipient (23) avec un dépôt de carbonate de calcium situé le long du trajet d'écoulement de gaz après le premier canal (21) de l'échangeur de chaleur.

2. Système selon la revendication 1, ledit récipient (23) avec le dépôt de carbonate de calcium étant positionné entre la sortie de gaz (37) de la chambre de post-combustion (30) et le second canal (22) de l'échangeur de chaleur.

3. Système selon la revendication 1, ledit récipient (23) avec le dépôt de carbonate de calcium étant positionné derrière le second canal (22) de l'échangeur de chaleur.

4. Système selon la revendication 1, ledit récipient (23) avec le dépôt de carbonate de calcium étant positionné entre le premier canal (21) de l'échangeur de chaleur et l'entrée (32) de la chambre de post-combustion (30).

5. Procédé permettant la purification de gaz de contaminants dans un système selon l'une quelconque des revendications précédentes, le procédé comprenant :
- dans le cyclone (10), l'ozonisation (101) et le dépoussiérage (102) du gaz ;
- la direction (103) du gaz depuis le cyclone (10) jusqu'à la chambre de post-combustion (30) par l'intermédiaire du premier canal (21) de l'échangeur de chaleur ;
- la combustion (104) successive du gaz dans la chambre de post-combustion (30) au moyen d'éléments chauffants possédant une température dans une plage allant de 600 à 800°C, et au moyen de générateurs à micro-ondes (34) qui chauffent les éléments en céramique (35) à une température comprise dans la plage allant de 800 à 1200°C ;
- la direction (105) du gaz chauffé depuis la chambre de post-combustion (30) jusqu'au second canal (22) de l'échangeur de chaleur, chauffant ainsi le gaz s'écoulant par l'intermédiaire du premier canal (21) de l'échangeur de chaleur ;
- la décharge (106) du gaz dans l'atmosphère par l'intermédiaire de la sortie de gaz (24) ; et
- le passage (107) du gaz, qui quitte le premier canal (21) de l'échangeur de chaleur, à travers le récipient (23) contenant le dépôt de carbonate de calcium, chauffant ainsi le dépôt à une température comprise dans la plage allant de 300 à 500°C.
